# EUROPEAN PATENT APPLICATION

(11) **EP 2 838 254 A1**
(43) Date of publication of application: **18.02.2015**
(21) Application number: 14154821.4
(22) Date of filing: 12.02.2014
(51) Int. Cl.: H04N 5/232

(54) **Photographing apparatus and method of controlling the same**

(30) Priority: 14.08.2013 KR 20130096876
(71) Applicant: Samsung Electronics Co., Ltd, Gyeonggi-do 443-742 (KR)
(72) Inventor: Choi, Juang-hwan, Gyeonggi-do (KR)
(74) Representative: Misselbrook, Paul

(57) **Abstract**

A method of controlling a photographing apparatus is described. A user interface is provided that includes an aperture setting menu for setting an aperture value of the photographing apparatus, a shutter speed setting menu for setting a shutter speed value of the photographing apparatus, and an exposure meter for displaying an exposure value. At least one of an aperture selection signal regarding the aperture setting menu or a shutter speed selection signal regarding the shutter speed setting menu is received. At least one of the aperture value, the shutter speed value, or the exposure value is calculated based on at least one of the received aperture selection signal or the received shutter speed selection signal.

## Description

### CROSS REFERENCE TO RELATED APPLICATIONS

This application claims the priority benefit under 35 U.S.C. § 119(a) from Korean Patent Application No. 10-2013-0096876, filed on August 14, 2013, in the Korean Intellectual Property Office, the disclosure of which is incorporated by reference herein in its entirety.

### BACKGROUND

### 1. Field

One or more embodiments relate to a photographing apparatus and a method of controlling the same.

### 2. Related Art

In general, a camera adjusts an exposure value by using an aperture and a shutter speed, and photographing modes of the camera are divided into a program mode (mode P), an aperture priority mode (mode A), a shutter speed priority mode (mode S), and a manual mode (mode M) according to a method of manipulating the aperture and the shutter speed.

A typical photographing apparatus should have a plurality of individual photographing modes, and should switch the photographing modes by using a switch such as a dial. Also, if a user desires to set an exposure value under a condition different from a current condition, the user should switch a current photographing mode to a desired photographing mode before photographing is performed.

### SUMMARY

One or more embodiments include a photographing apparatus capable of individually performing a plurality of photographing modes without switching the photographing modes by providing a user interface for integrating the photographing modes, and a method of controlling the photographing apparatus.

Additional aspects will be set forth in part in the description which follows and, in part, will be apparent from the description, or may be learned by practice of the presented embodiments.

According to one or more embodiments, a method of controlling a photographing apparatus includes: providing a user interface including an aperture setting menu for setting an aperture value of the photographing apparatus, a shutter speed setting menu for setting a shutter speed value of the photographing apparatus, and an exposure meter for displaying an exposure value; receiving at least one of an aperture selection signal regarding the aperture setting menu or a shutter speed selection signal regarding the shutter speed setting menu; and calculating at least one of the aperture value, the shutter speed value, or the exposure value based on at least one of the received aperture selection signal or the received shutter speed selection signal.

Photographing modes including a program mode (mode P), an aperture priority mode (mode A), a shutter speed priority mode (mode S), and a manual mode (mode M) may be performed based on one or more of the aperture value, the shutter speed value, or the exposure value.

The method of controlling the photographing apparatus may include: if the aperture selection signal is received, providing an aperture changing menu for changing the aperture value; setting the aperture value to a selected value via the aperture changing menu; measuring an amount of light on an object based on a shutter release signal; calculating the exposure value based on the measured amount of light; calculating the shutter speed value based on the set aperture value and the calculated exposure value; and displaying the set aperture value, the calculated exposure value, and the calculated shutter speed value.

A color of at least one of the aperture setting menu or the set aperture value of the aperture changing menu may indicate a photographing mode of the photographing apparatus.

If the aperture value is set as auto on the aperture changing menu, the aperture value and the shutter speed value may be calculated based on the measured amount of light.

The method of controlling the photographing apparatus may include: if the shutter speed selection signal is received, providing a shutter speed changing menu for changing the shutter speed value; setting the shutter speed value to a selected value via the shutter speed changing menu; measuring an amount of light on an object based on a shutter release signal; calculating the exposure value based on the measured amount of light; calculating the aperture value based on the set shutter speed value and the calculated exposure value; and displaying the set shutter speed value, the calculated exposure value, and the calculated aperture value.

A color of at least one of the shutter speed setting menu or the set shutter speed value of the shutter speed changing menu may indicate a photographing mode of the photographing apparatus.

If the shutter speed value is set as auto on the shutter speed changing menu, the aperture value and the shutter speed value may be calculated based on the measured amount of light.

The method of controlling the photographing apparatus may include: if the aperture selection signal is received, providing an aperture changing menu for changing the aperture value, and setting the aperture value to a selected aperture value via the aperture changing menu; if the shutter speed selection signal is received, providing a shutter speed changing menu for changing the shutter speed value, and setting the shutter speed value to a selected shutter speed value via the shutter speed changing menu; measuring an amount of light on an object based on a shutter release signal; calculating the exposure value based on the measured amount of light; displaying the set aperture value, the set shutter speed value, and the calculated exposure value.

The method of controlling the photographing apparatus may include: measuring an amount of light on an object based on a shutter release signal; calculating the exposure value based on the measured amount of light; individually calculating the aperture value and the shutter speed value based on the calculated exposure value; and displaying the calculated exposure value, the calculated aperture value, and the calculated shutter speed value.

The method of controlling the photographing apparatus may further include transmitting photographing parameters including the aperture value, the shutter speed value, and the exposure value to the photographing apparatus.

According to one or more embodiments, there is provided a photographing apparatus including: a user interface providing unit that provides a user interface including an aperture setting menu for setting an aperture value of the photographing apparatus, a shutter speed setting menu for setting a shutter speed value of the photographing apparatus, and an exposure meter for displaying an exposure value; and a photographing parameter calculation unit that receives at least one of an aperture selection signal regarding the aperture setting menu or a shutter speed selection signal regarding the shutter speed setting menu, and that calculates at least one of the aperture value, the shutter speed value, or the exposure value based on at least one of the received aperture selection signal or the received shutter speed selection signal.

Photographing modes including a program mode (mode P), an aperture priority mode (mode A), a shutter speed priority mode (mode S), and a manual mode (mode M) may be performed by the photographing apparatus based on one or more of the aperture value, the shutter speed value, or the exposure value.

The photographing apparatus may further include: a light amount measurement unit that measures an amount of light on an object according to a shutter release signal; and a photographing parameter display control unit that displays the aperture value, the shutter speed value, and the exposure value. If the aperture selection signal is received, the user interface providing unit provides an aperture changing menu for changing the aperture value, and sets the aperture value to a selected value via the aperture changing menu. The photographing parameter calculation unit calculates the exposure value based on the measured amount of light. The photographing parameter calculation unit calculates the shutter speed value based on the set aperture value and the calculated exposure value. The photographing parameter display control unit displays the set aperture value, the calculated exposure value, and the calculated shutter speed value.

The photographing parameter display control unit may change a color of at least one of the aperture setting menu or the set aperture value of the aperture changing menu to indicate a photographing mode of the photographing apparatus.

The photographing apparatus may further include: a light amount measurement unit that measures an amount of light on an object according to a shutter release signal; and a photographing parameter display control unit that displays the aperture value, the shutter speed value, and the exposure value. If the shutter speed selection signal is received, the user interface providing unit provides a shutter speed changing menu for changing the shutter speed value, and sets the shutter speed value to a selected value via the shutter speed changing menu. The photographing parameter calculation unit calculates the exposure value based on the measured amount of light. The photographing parameter calculation unit calculates the aperture value based on the set shutter speed value and the calculated exposure value. The photographing parameter display control unit displays the set shutter speed value, the calculated exposure value, and the calculated aperture value.

The photographing parameter display control unit may change a color of at least one of the shutter speed setting menu or the set shutter speed value of the shutter speed changing menu to indicate a photographing mode of the photographing apparatus.

The photographing apparatus may further include: a light amount measurement unit that measures an amount of light on an object according to a shutter release signal; and a photographing parameter display control unit that displays the aperture value, the shutter speed value, and the exposure value. If the aperture selection signal is received, the user interface providing unit provides an aperture changing menu for changing the aperture value, and sets the aperture value to a selected aperture value via the aperture changing menu. If the shutter speed selection signal is received, the user interface providing unit provides a shutter speed changing menu for changing the shutter speed value, and sets the shutter speed value to a selected shutter speed value via the shutter speed changing menu. The photographing parameter calculation unit calculates the exposure value based on the measured amount of light. The photographing parameter display control unit displays the set aperture value, the set shutter speed value, and the calculated exposure value.

According to one or more embodiments, a remote control apparatus for remotely controlling a photographing parameter of a photographing apparatus includes: a user interface providing unit that provides a user interface including an aperture setting menu for setting an aperture value of the photographing apparatus, a shutter speed setting menu for setting a shutter speed value of the photographing apparatus, and an exposure meter for displaying an exposure value; a photographing parameter calculation unit that receives at least one of an aperture selection signal regarding the aperture setting menu or a shutter speed selection signal regarding the shutter speed setting menu, and calculating at least one of the aperture value, the shutter speed value, or the exposure value based on at least one of the received aperture selection signal or the received shutter speed selection signal; and a communication unit that transmits the at least one of the calculated aperture value, the calculated shutter speed value, or the calculated exposure value to the photographing apparatus.

According to one or more embodiments, there is provided a non-transitory computer-readable recording medium having recorded thereon a computer program for executing the method of controlling the photographing apparatus.

### BRIEF DESCRIPTION OF THE DRAWINGS

These and/or other aspects will become apparent and more readily appreciated from the following description of the embodiments, taken in conjunction with the accompanying drawings of which:
FIG. 1 is a block diagram of a digital camera as an example of a photographing apparatus according to an embodiment;
FIG. 2 is a block diagram of a digital signal processing unit of the photographing apparatus illustrated in FIG. 1;
FIG. 3 is a diagram of a user interface according to an embodiment;
FIG. 4 is a diagram showing an example of performing an aperture priority mode (mode A) by using the user interface illustrated in FIG. 3;
FIG. 5 is a diagram showing an example of performing a shutter speed priority mode (mode S) by using the user interface illustrated in FIG. 3;
FIG. 6 is a diagram showing an example of performing a manual mode (mode M) by using the user interface illustrated in FIG. 3;
FIG. 7 is a schematic diagram of a remote photographing control system according to an embodiment;
FIG. 8 is a diagram of a user interface provided to a remote control apparatus of the remote photographing control system illustrated in FIG. 7;
FIG. 9 is a flowchart of a method of controlling a photographing apparatus, according to an embodiment;
FIG. 10 is a flowchart of a method of controlling a photographing apparatus, according to another embodiment;
FIG. 11 is a flowchart of a method of controlling a photographing apparatus, according to another embodiment; and
FIG. 12 is a flowchart of a method of controlling a photographing apparatus, according to another embodiment.

### DETAILED DESCRIPTION

While various embodiments are susceptible to various modifications and alternative forms, specific embodiments thereof are shown by way of example in the drawings and will herein be described in detail. It should be understood, however, that there is no intent to limit the embodiments to the particular forms disclosed, but conversely, the embodiments are to cover all modifications, equivalents, and alternatives falling within the spirit and scope of the embodiments. In the following description of the present disclosure, a detailed description of known functions and configurations incorporated herein will be omitted when it may make the subject matter of the present disclosure unclear.

It will be understood that, although the terms first, second, etc. may be used herein to describe various elements, these elements should not be limited by these terms. These terms are only used to distinguish one element from another.

The terminology used herein is for the purpose of describing particular embodiments only and is not intended to be limiting of the embodiments of the present disclosure. As used herein, the singular forms "a", "an" and "the" are intended to include the plural forms as well, unless the context clearly indicates otherwise. It will be further understood that the terms "comprises", "comprising,", "includes" and/or "including", when used herein, specify the presence of stated features, integers, steps, operations, elements, and/or components, but do not preclude the presence or addition of one or more other features, integers, steps, operations, elements, components, and/or groups thereof.

Hereinafter, the present disclosure will be described in detail by explaining embodiments of the disclosure with reference to the attached drawings. Like reference numerals in the drawings denote like elements and thus repeated descriptions will be omitted.

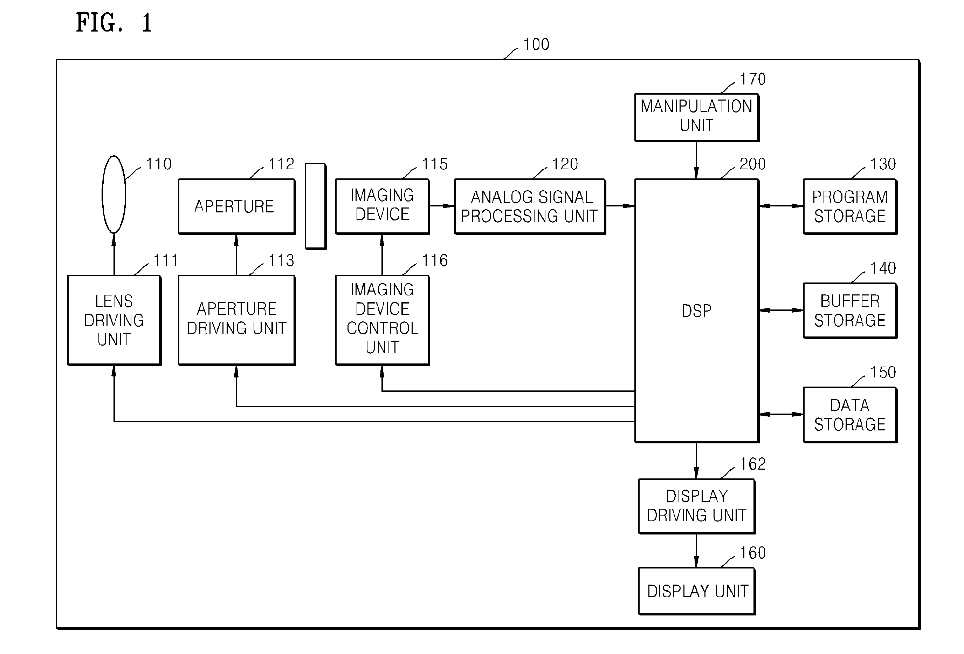

FIG. 1 is a block diagram of a digital camera 100 as an example of a photographing apparatus according to an embodiment.

Although the digital camera 100 is described as an example of a photographing apparatus according to an embodiment, the photographing apparatus is not limited to the digital camera 100 illustrated in FIG. 1, and may also be applied to a portable device such as a smart phone including a camera module, a mobile phone, a personal digital assistant ("PDA"), a portable multimedia player ("PMP"), or a camcorder.

The digital camera 100 may include a lens unit 110, a lens driving unit 111, an aperture 112, an aperture driving unit 113, an imaging device 115, an imaging device control unit 116, an analog signal processing unit 120, a program storage 130, a buffer storage 140, a data storage 150, a display driving unit 162, a display unit 160, a digital signal processing unit ("DSP") 200, and a manipulation unit 170. Here, the lens unit 110, the lens driving unit 111, the aperture 112, the aperture driving unit 113, the imaging device 115, the imaging device control unit 116, and the analog signal processing unit 120 may be collectively referred to as an imaging unit.

The lens unit 110 focuses an optical signal. The lens unit 110 includes, for example, a zoom lens for increasing or reducing a viewing angle according to a focal length, and a focus lens for focusing on an object, and each of the zoom lens and the focus lens may include one lens or a group of a plurality of lenses. The aperture 112 controls an intensity of incident light by adjusting its degree of opening.

The lens driving unit 111 and the aperture driving unit 113 respectively drive the lens unit 110 and the aperture 112 according to a control signal received from the digital signal processing unit 200. The lens driving unit 111 controls a focal length by adjusting the position of a lens, and performs operations such as auto focusing, zooming, and focusing. The aperture driving unit 113 adjusts the degree of opening of the aperture 112, and performs operations such as auto focusing, automatic exposure compensation, focusing, and depth of field adjusting by particularly adjusting an f number or an aperture value.

The optical signal transmitted through the lens unit 110 reaches a light-receiving surface of the imaging device 115 so as to form an image of an object. The imaging device 115 may use, for example, a charge coupled device ("CCD"), a complementary metal oxide semiconductor image sensor ("CMOS image sensor" or "CIS"), or a high-speed image sensor for converting the optical signal into an electric signal. The imaging device 115 may have, for example, a sensitivity controlled by the imaging device control unit 116. The imaging device control unit 116 may control the imaging device 115 according to a control signal automatically generated due to an image signal input in real time, or a control signal manually input according to a user's manipulation. An exposure time of the imaging device 115 is adjusted by a shutter 114. The shutter 114 includes a mechanical shutter for adjusting incidence of light by moving a lens shade, or an electronic shutter for controlling exposure by supplying an electric signal to the imaging device 115.

The analog signal processing unit 120 performs, for example, noise reduction, gain adjustment, waveform regulation, or analog-to-digital conversion on an analog signal provided from the imaging device 115.

The manipulation unit 170 is an element for receiving a control signal input from an external environment or a user. The manipulation unit 170 may include one or more of a shutter release button for inputting a shutter release signal for taking a photo by exposing the imaging device 115 to light for a determined time, a video recording button for inputting a video recording start and a video recording end for capturing a video, a power button for inputting a control signal for controlling power on or off, a wide-zoom button and a tele-zoom button for respectively increasing and reducing a viewing angle according to an input, and various function buttons for inputting text, selecting a mode such as a photographing mode or a display mode, selecting a white balance setting function, and selecting an exposure setting function. Although the manipulation unit 170 may be formed as various buttons as described above, the manipulation unit 170 is not limited thereto, and may be formed in any other form for receiving inputs of a user, for example, a keyboard, a touch pad, a touchscreen, or a remote controller.

The digital camera 100 includes the program storage 130 for storing programs such as an operating system for driving the digital camera 100 or an application system, the buffer storage 140 for temporarily storing data used for or resulting from a calculation, and the data storage 150 for storing image files and video files including image signals, and various types of information used by the programs.

The digital camera 100 includes the display unit 160 for displaying an operation state of the digital camera 100, or still image data or moving image data captured by the digital camera 100. The display unit 160 may provide visual information or auditory information to a user. In order to provide visual information, the display unit 160 may be formed as, for example, a liquid crystal display ("LCD") panel or an organic light emitting display ("OLED") panel. The display driving unit 162 provides a driving signal to the display unit 160. According to an embodiment, the display unit 160 may be formed on a rear surface of the digital camera 100 such as a surface where manipulation panels are located. Also, the display unit 160 may be formed on a front surface of the digital camera 100 so as to face an object, or may be located on the rear surface at a normal state and may be flipped upward to face an object. Also, the display unit 160 may be formed as dual LCDs located on the rear surface and the front surface.

The digital camera 100 includes the digital signal processing unit 200 for processing an input image signal, and controlling the other elements according to the processed image signal or an external input signal. The digital signal processing unit 200 may perform image signal processing for improving image quality, for example, noise reduction, gamma correction, color filter array interpolation, color matrix, color correction, or color enhancement, on input image data. Also, the digital signal processing unit 200 may generate an image file by compressing image data generated by performing the image signal processing, or may reconstruct image data from the image file. The image data may be compressed in a reversible or irreversible format. The compressed data may be stored in the data storage 150. Also, the digital signal processing unit 200 may functionally perform, for example, hue adjustment, blurring, edge enhancement, image analysis, image recognition, or image effecting. The image recognition may include, for example, face recognition or scene recognition. For example, brightness adjustment, color correction, contrast adjustment, edge enhancement, screen splitting, character image generation, or image combining may be performed.

Also, the digital signal processing unit 200 may execute a program stored in the program storage 130. The digital signal processing unit 200 may include a separate module so as to generate control signals for controlling, for example, auto focusing, zooming, focusing, or automatic exposure compensation. The digital signal processing unit 200 may also provide the control signals to the lens driving unit 111, the aperture driving unit 113, or the imaging device control unit 116, and may control operations of various elements included in the digital camera 100, for example, the shutter 114 or a flash.

According to various embodiments, a photographing apparatus has four photographing modes described below. In a program mode (mode P), the digital camera 100 measures the amount of light on an object, and automatically sets an aperture value and a shutter speed value. In an aperture priority mode (mode A), if a user manually sets an aperture value, the digital camera 100 measures the amount of light on an object, and automatically sets a shutter speed value for providing an appropriate exposure value when combined with the set aperture value. In a shutter speed priority mode (mode S), if the user manually sets a shutter speed value, the digital camera 100 measures the amount of light on an object, and automatically sets an aperture value for providing an appropriate exposure value when combined with the set shutter speed value. In a manual mode (mode M), if the user manually sets an aperture value and a shutter speed value, the digital camera 100 measures the amount of light on an object by using the currently set values, and informs an exposure value to the user.

The mode P is an automatic mode. In this case, the digital camera 100 automatically calculates an exposure value by measuring the amount of light, and sets an aperture value and a shutter speed value appropriate for the exposure value. Thus, the mode P may be used when the user does not want to select the exposure value. In the mode A, an aperture value is set to a value selected by the user, and a shutter speed value is automatically adjusted to achieve an appropriate exposure value based on the set aperture value. The mode A may be used when the user wants to take photos by fixing a certain aperture value (for example, when a high aperture value is used for an out-of-focus effect). In the mode S, a shutter speed value is set to a value selected by the user, and an aperture value is automatically adjusted to achieve an appropriate exposure value based on the set shutter speed value. The mode S may be used when the user wants to take photos by fixing a certain shutter speed value (for example, when a high shutter speed value is used to capture an image of a fast moving object). In the mode M, an aperture value and a shutter speed value are set to respective values by the user, and the digital camera 100 displays an exposure value regarding the currently set aperture and shutter speed values to the user. The mode M may be used when the user takes photos such as night photos by fixing desired setting values.

Most photographing apparatuses support all of the above-described four photographing modes, and provide a method of switching the photographing modes by using a switch such as a dial. In this case, before the user takes photos, the user selects a photographing mode and switches the photographing modes according to the user's intention. Also, if the user's intention is changed while taking photos, a new photographing mode should be selected according to the changed user's intention, and a current photographing mode should be switched to the new photographing mode.

According to various embodiments, the above-described four photographing modes (the modes P, A, S, and M) may be performed without switching the photographing modes by providing a user interface for integrating the photographing modes.

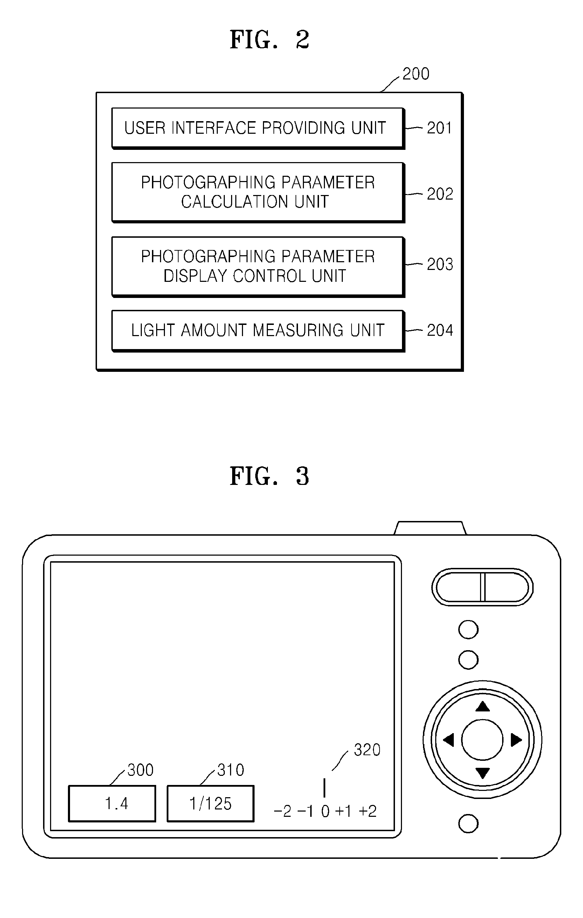

FIG. 2 is a block diagram of the digital signal processing unit 200 of the photographing apparatus illustrated in FIG. 1.

Referring to FIG. 2, the digital signal processing unit 200 includes a user interface providing unit 201, a photographing parameter calculation unit 202, a photographing parameter display control unit 203, and a light amount measurement unit 204.

The user interface providing unit 201 provides a user interface for displaying an aperture setting menu for setting an aperture value of the digital camera 100, a shutter speed setting menu for setting a shutter speed value of the digital camera 100, and an exposure meter for displaying an exposure value of the digital camera 100. Here, although the user interface may be provided as a drop-box or list-box on a touchscreen, the user interface is not limited thereto, and may have various forms such as using a direction key and a button.

Referring to FIG. 3, a user interface according to an embodiment is illustrated. A user interface including an aperture setting menu 300, a shutter speed setting menu 310, and an exposure meter 320 is provided at a lower part of a display screen. Here, although the user interface is illustrated as a menu bar, the user interface is not limited thereto, and may be provides in various forms.

The aperture setting menu 300 displays an aperture value (shown as "1.4") currently set on the digital camera 100. If a user touches the aperture setting menu 300, a drop-box for selecting one of various aperture values may be generated, and the user may select and set a desired aperture value.

The shutter speed setting menu 310 displays a shutter speed value (1/125) currently set on the digital camera 100. If the user touches the shutter speed setting menu 310, a drop-box for selecting one of various shutter speed values may be generated, and the user may select and set a desired shutter speed value.

The exposure meter 320 displays an exposure value appropriate for the aperture value and the shutter speed value currently set on the digital camera 100 or to be set by the user.

The photographing parameter calculation unit 202 receives setting and selection signals based on user input from the user interface provided to the user, and calculates appropriate photographing parameters. The photographing parameter calculation unit 202 receives an aperture selection signal based on the aperture setting menu, and a shutter speed selection signal based on the shutter speed setting menu, and calculates an aperture value, a shutter speed value, and an exposure value. The digital camera 100 includes a luminance sensor, such as the light amount measuring unit 204, that measures the amount of light on an object to be photographed, for example, if a half shutter button is pressed (if a shutter release signal is received), and provides measurement information to the photographing parameter calculation unit 202. The photographing parameter calculation unit 202 calculates an appropriate exposure value achievable with the currently set aperture value and the shutter speed value, according to the measurement information.

The photographing parameter display control unit 203 controls display of the aperture value, the shutter speed value, and the exposure value calculated by the photographing parameter calculation unit 202. For example, in order to perform the mode A, the aperture setting menu 300 illustrated in FIG. 3, and the aperture value set on the aperture setting menu 300 are displayed with a color different from the color of other menus and other set values. Accordingly, the user may be easily aware that photographing is currently performed in the mode A. Also, in order to perform the mode S, the shutter speed setting menu 310 illustrated in FIG. 3 and the set shutter speed value are displayed with a different color, and thus the user may be aware that photographing is currently performed in the mode S.

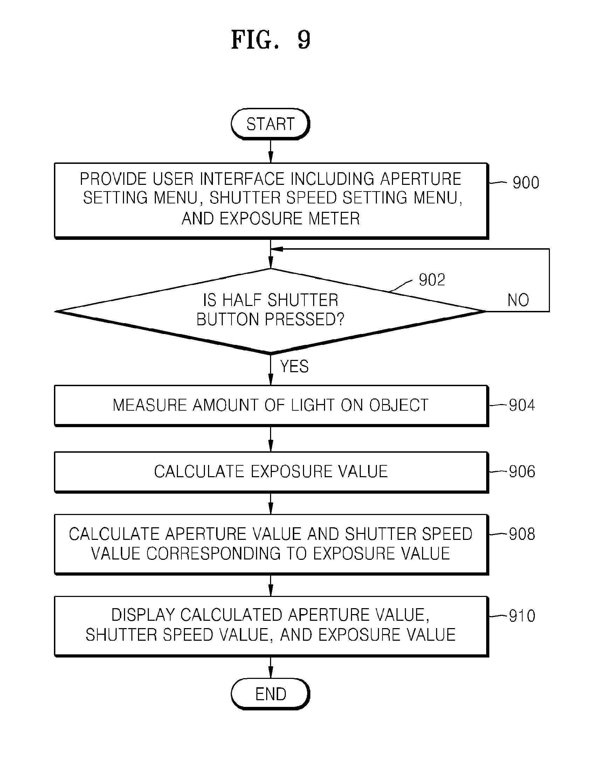

FIG. 9 is a flowchart of a method of controlling a photographing apparatus, according to an embodiment. The method described in relation to FIG. 9 is a method of performing the mode P.

Referring to FIG. 9, in operation 900, as illustrated in FIG. 3, a user interface including an aperture setting menu, a shutter speed setting menu, and an exposure meter is provided.

If a half shutter button is pressed in operation 902 (YES at 902), the amount of light on an object is measured and an exposure value is calculated in operations 904 and 906. In operation 908, an aperture value and a shutter speed value corresponding to the exposure value are calculated. In operation 910, the calculated aperture value, the shutter speed value, and the exposure value are displayed. As shown in FIG. 3, measurement information obtained by measuring the amount of light on an object, and an exposure value (0) achievable when the object is photographed by using a currently set aperture value (1.4) and a shutter speed value (1/125) are displayed on the exposure meter 320. Accordingly, if photographing is performed in the mode P, a user may be aware that the appropriate exposure value (0) is achievable by using the currently set aperture value (1.4) and the shutter speed value (1/125).

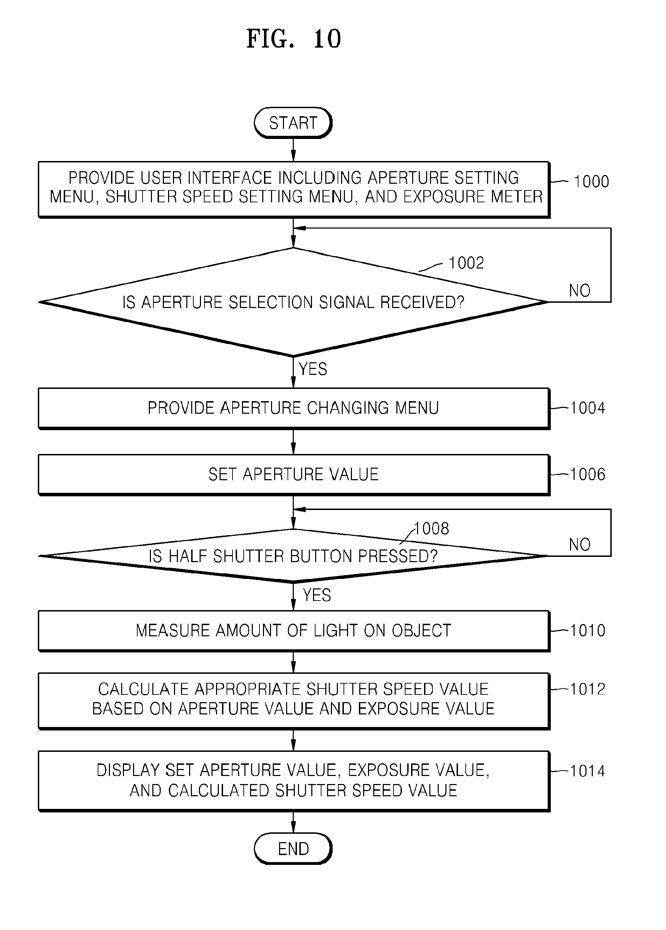

FIG. 10 is a flowchart of a method of controlling a photographing apparatus, according to another embodiment. The method described in relation to FIG. 10 is a method of performing the mode A.

Referring to FIG. 10, in operation 1000, as illustrated in FIG. 3, a user interface including an aperture setting menu 400, a shutter speed setting menu 410, and an exposure meter 420 is provided.

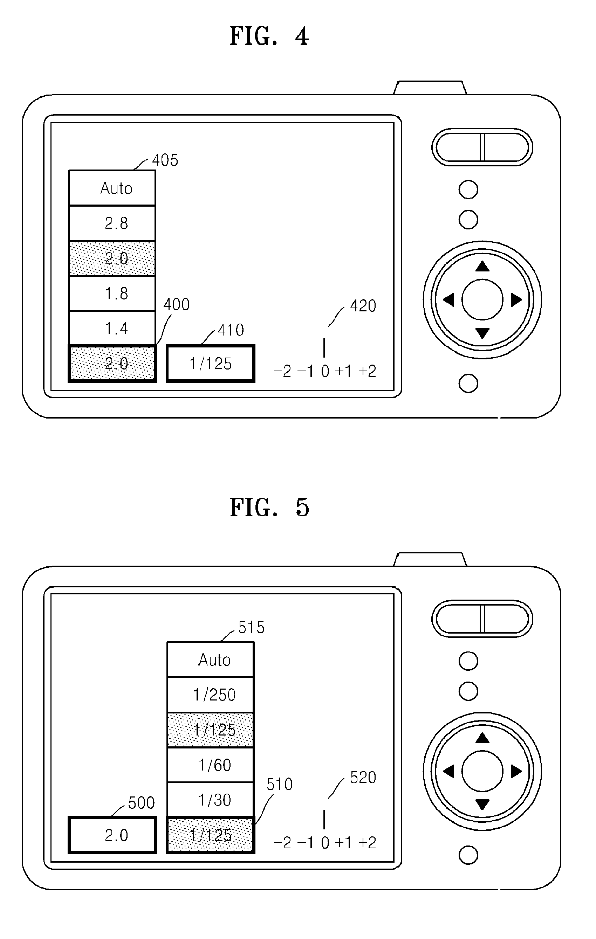

In operation 1002, it is determined whether an aperture selection signal is received. If the aperture selection signal is received (YES at 1002), an aperture changing menu 405 is provided in operation 1004, and an aperture value is set in operation 1006. As illustrated in FIG. 4, if a user touches the aperture setting menu 400 (e.g., if an aperture selection signal is received), a drop-box for selecting an aperture value (e.g., the aperture changing menu 405) is displayed. If the user selects a desired aperture value ("2.0" as shown in FIG. 4) on the drop-box, the aperture value is set as 2.0. Here, the aperture setting menu 400 and the set aperture value (2.0) of the aperture changing menu 405 may be highlighted or displayed with a different color, and the user may be aware that photographing is currently performed in the mode A.

If a half shutter button is pressed in operation 1008 (YES at 1008), the amount of light on an object is measured in operation 1010.

In operation 1012, a shutter speed value for achieving an appropriate exposure value is calculated based on the aperture value set in operation 1006, and measurement information obtained by measuring the amount of light on the object in operation 1010.

In operation 1014, the set aperture value, the calculated shutter speed value, and the exposure value are displayed. As illustrated in FIG. 4, if the user sets the aperture value as 2.0 (mode A), the shutter speed value for achieving an appropriate exposure value by measuring the amount of light on the object is calculated and displayed as 1/125.

Although not shown in FIG. 10, if the user selects "auto" on the aperture changing menu 405, the mode P is performed and, as illustrated in FIG. 3, an aperture value and a shutter speed value for achieving an appropriate exposure value are calculated and displayed based on the measurement information obtained by measuring the amount of light on the object.

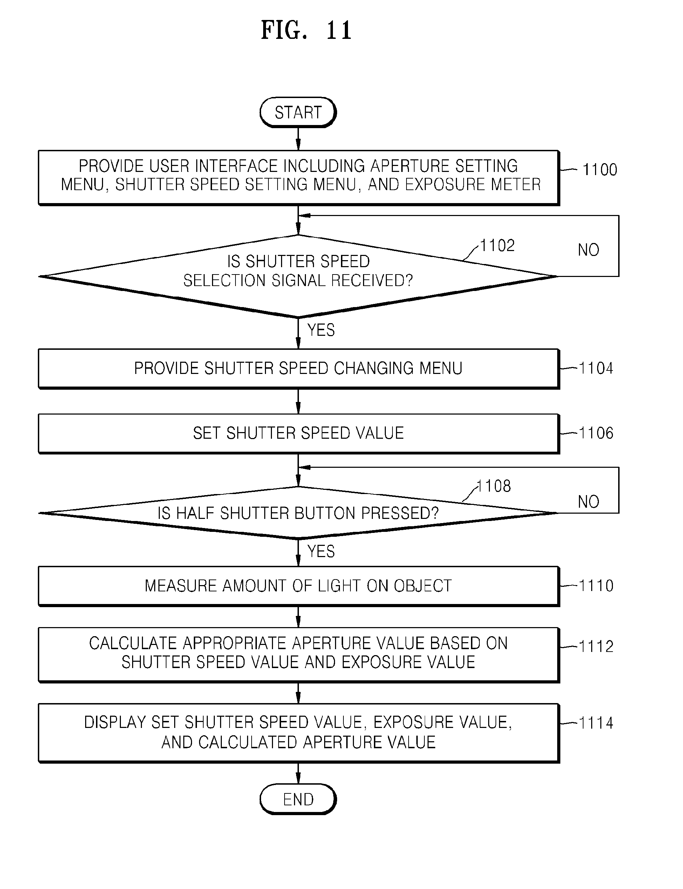

FIG. 11 is a flowchart of a method of controlling a photographing apparatus, according to another embodiment. The method described in relation to FIG. 11 is a method of performing the mode S.

Referring to FIG. 11, in operation 1100, as illustrated in FIG. 3, a user interface including an aperture setting menu 500, a shutter speed setting menu 510, and an exposure meter 520 is provided.

In operation 1102, it is determined whether a shutter speed selection signal is received. If the shutter speed selection signal is received (YES at 1102), a shutter speed changing menu 515 is provided in operation 1104, and a shutter speed value is set in operation 1106. As illustrated in FIG. 5, if a user touches the shutter speed setting menu 510 (if a shutter speed selection signal is received), a drop-box for selecting a shutter speed value (e.g., the shutter speed changing menu 515) is displayed. If the user selects a desired shutter speed value (1/125) on the drop-box, the shutter speed value is set as 1/125. Here, the shutter speed setting menu 510 and the set shutter speed value (1/125) of the shutter speed changing menu 515 may be highlighted or displayed with a different color, and the user may be aware that photographing is currently performed in the mode S.

If a half shutter button is pressed in operation 1108 (YES at 1108), the amount of light on an object is measured in operation 1110.

In operation 1112, an aperture value for achieving an appropriate exposure value is calculated based on the shutter speed value set in operation 1106, and measurement information obtained by measuring the amount of light on the object in operation 1110.

In operation 1114, the set shutter speed value, the calculated aperture value, and the exposure value are displayed. As illustrated in FIG. 5, if the user sets the shutter speed value as 1/125 (mode S), the aperture value for achieving an appropriate exposure value by measuring the amount of light on the object is calculated and displayed as 2.0.

Although not shown in FIG. 11, if the user selects "auto" on the shutter speed changing menu 515, the mode P is performed and, as illustrated in FIG. 3, an aperture value and a shutter speed value for achieving an appropriate exposure value are calculated and displayed based on the measurement information obtained by measuring the amount of light on the object.

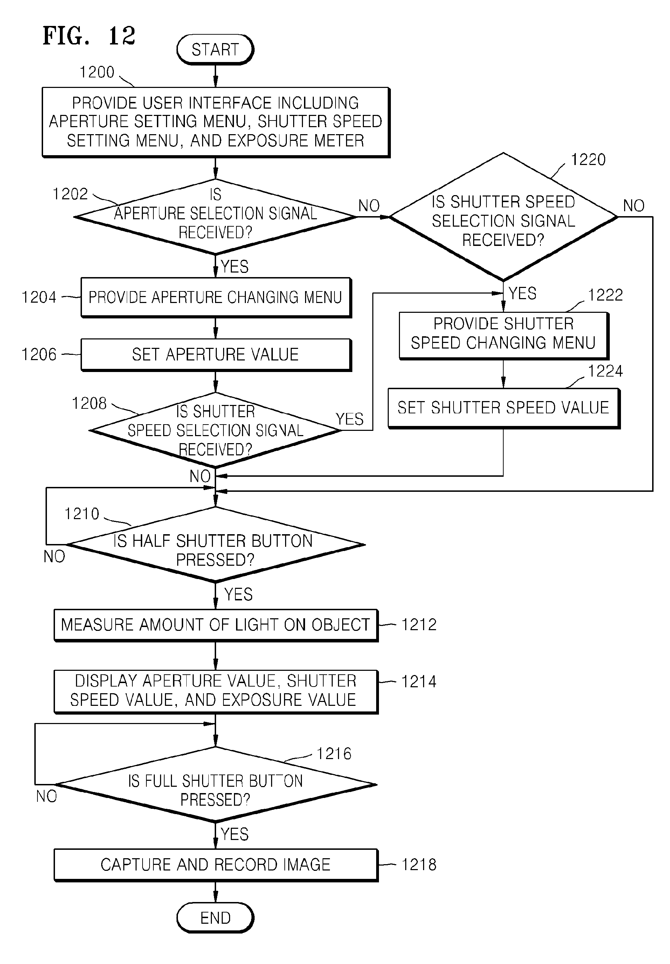

FIG. 12 is a flowchart of a method of controlling a photographing apparatus, according to another embodiment. The method described in relation to FIG. 12 is a method of performing the mode M.

Referring to FIG. 12, in operation 1200, as illustrated in FIG. 3, a user interface including an aperture setting menu 600, a shutter speed setting menu 610, and an exposure meter 620 is provided.

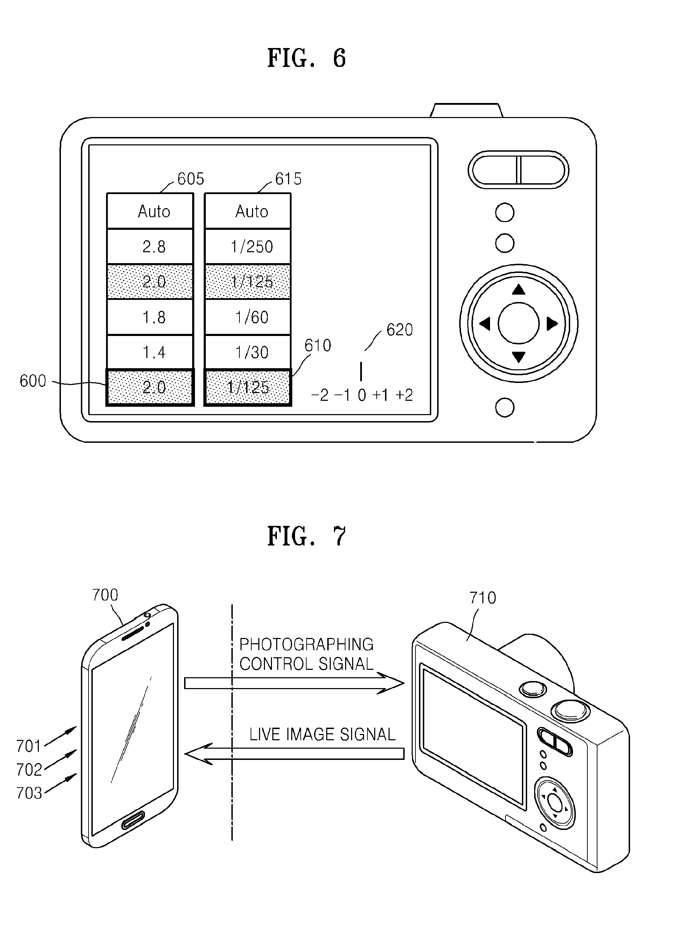

In operation 1202, it is determined whether an aperture selection signal is received. If the aperture selection signal is received (YES at 1202), an aperture changing menu 605 is provided in operation 1204, and an aperture value is set in operation 1206. As illustrated in FIG. 6, if a user touches the aperture setting menu 600 (e.g., if an aperture selection signal is received), a drop-box for selecting an aperture value (e.g., the aperture changing menu 605) is displayed. If the user selects a desired aperture value (2.0) on the drop-box, the aperture value is set as 2.0. Here, the aperture setting menu 600 and the set aperture value (2.0) of the aperture changing menu 605 may be highlighted or displayed with a different color.

In operation 1208, it is determined whether a shutter speed selection signal is received. If the shutter speed selection signal is received (YES at 1208), a shutter speed changing menu 615 is provided in operation 1222, and a shutter speed value is set in operation 1224. As illustrated in FIG. 6, if a user touches the shutter speed setting menu 610 (e.g., if a shutter speed selection signal is received), a drop-box for selecting a shutter speed value (e.g., the shutter speed changing menu 615) is displayed. If the user selects a desired shutter speed value (1/125) on the drop-box, the shutter speed value is set as 1/125. Here, the shutter speed setting menu 610 and the set shutter speed value (1/125) of the shutter speed changing menu 615 may be highlighted or displayed with a different color.

The user may be aware that both the aperture value (2.0) and the shutter speed value (1/125) are selected by selecting the aperture setting menu 600 and the shutter speed setting menu 610, and that photographing is currently performed in the mode M.

However, if the shutter speed selection signal is not received in operation 1208 (NO at 1208), the method proceeds to operations 1210 to 1218. In this case, the mode A is performed.

Also, if the aperture selection signal is not received in operation 1202 (NO at 1202) and the shutter speed selection signal is received in operation 1220 (YES at 1220), the mode S including operations 1222 to 1224 is performed. In this case, if the shutter speed selection signal is not received in operation 1220 (NO at 1220), the mode P including operations 1210 to 1214 is performed.

If a half shutter button is pressed in operation 1210 (YES at 1210), an exposure value is calculated by measuring the amount of light on the object in operation 1212.

In operation 1214, the aperture value, the shutter speed value, and the exposure value are displayed. Then, if a full shutter button is pressed in operation 1216 (YES at 1216), an image of the object is captured by using the set or calculated photographing parameters and is recorded in operation 1218.

FIG. 7 is a schematic diagram of a remote photographing control system according to an embodiment.

Referring to FIG. 7, a remote control apparatus 700 and a photographing apparatus 710 are illustrated. The photographing apparatus 710 may include a portable digital device such as a digital camera, a mobile phone, a smart phone, a PDA, a PMP, or a camcorder. Also, the photographing apparatus 710 has a function of remotely photographing a predetermined object, and a function of compressing and transmitting a live-view image to the remote control apparatus 700, and photographs the object due to a photographing control signal of the remote control apparatus 700 that remotely controls the photographing. The above operation is referred to as a remote shutter, a remote view finder, or a live shutter, but is not limited the above terms. In more detail, it refers to a case that a camera is placed in a fixed location, and a photo is taken by using a smart phone or other device that wirelessly communicates with the camera via a communication unit 701. Here, the remote control apparatus 700 illustrated in FIG. 7 may be a smart phone, and the photographing apparatus 710 may be a camera, or vice versa. In other words, the remote control apparatus 700 may be a portable terminal, e.g., a mobile phone or a smart phone, capable of photographing an object by, for example, wirelessly communicating with the photographing apparatus 710, e.g., a digital camera. While the photographing apparatus 710 is powered on and is ready to photograph a predetermined object, the photographing apparatus 710 transmits a live-view image to the remote control apparatus 700, and photographs the object according to a photographing control signal from the remote control apparatus 700, e.g., a signal corresponding to a photographing start signal, that is, a shutter release signal of the remote control apparatus 700. Before the photographing control signal is received, the live-view image of the object is displayed on a display unit, e.g., an LCD, of one or more of the photographing apparatus 710 or the remote control apparatus 700.

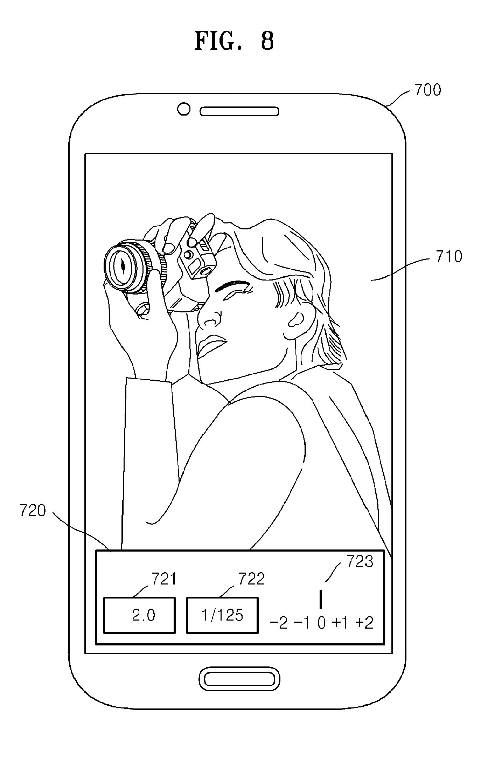

According to an embodiment, a user interface may be included in the remote control apparatus 700, for example, as an application or by a user interface providing unit 702. For example, if the remote control apparatus 700 is a smart phone, in most cases, the remote control apparatus 700 does not have a user interface for photographing modes such as the modes P, A, S, and M included in a general camera. Accordingly, according to embodiments of the present disclosure, a user interface for integrating photographing modes may be provided to the remote control apparatus 700, e.g., a smart phone. As illustrated in FIG. 8, a display unit of the remote control apparatus 700 displays an input image 710 to be captured, as a preview image. Together with the preview image, a user interface 720 including an aperture setting menu 721 for setting an aperture value of the photographing apparatus 710, a shutter speed setting menu 722 for setting a shutter speed value of the photographing apparatus 710, and an exposure meter 723 for displaying an exposure value is displayed. If a user has set a photographing parameter, the set photographing parameter (e.g., one or more of the aperture value or the shutter speed value) is transmitted to the photographing apparatus 710 as a photographing control signal. Accordingly, the user may check an exposure value based on the exposure meter 723 while manipulating the aperture setting menu 721 and the shutter speed setting menu 722 included in the user interface 720, and may easily perform the modes P, A, S, and M. In a further example, the remote control apparatus 700 includes a photographing parameter calculation unit 703 that receives at least one of an aperture selection signal regarding the aperture setting menu or a shutter speed selection signal regarding the shutter speed setting menu. The photographing parameter calculation unit 702 calculates at least one of the aperture value, the shutter speed value, or the exposure value based on at least one of the received aperture selection signal or the received shutter speed selection signal. The remote control apparatus 700 may transmit the at least one of the calculated aperture value, the calculated shutter speed value, or the calculated exposure value to the photographing apparatus via the communication unit 701.

As described above, according to one or more of the above embodiments of the present disclosure, a plurality of photographing modes may be individually performed without switching the photographing modes by providing a user interface for integrating the photographing modes.

The device described herein may comprise a processor, a memory for storing program data and executing it, a permanent storage such as a disk drive, a communications port for handling communications with external devices, and user interface devices, including a touch panel, keys, buttons, etc. When software modules or algorithms are involved, these software modules may be stored as program instructions or computer readable codes executable on the processor on a computer-readable medium. Examples of the computer readable recording medium include magnetic storage media (e.g., ROM, floppy disks, hard disks, etc.), and optical recording media (e.g., CD-ROMs, or DVDs). The computer readable recording medium can also be distributed over network coupled computer systems so that the computer readable code is stored and executed in a distributed fashion. This media can be read by the computer, stored in the memory, and executed by the processor.

All references, including publications, patent applications, and patents, cited herein are hereby incorporated by reference to the same extent as if each reference were individually and specifically indicated to be incorporated by reference and were set forth in its entirety herein.

For the purposes of promoting an understanding of the principles of the embodiments, reference has been made to the preferred embodiments illustrated in the drawings, and specific language has been used to describe these embodiments. However, no limitation of the scope of the embodiments is intended by this specific language, and the embodiments should be construed to encompass all embodiments that would normally occur to one of ordinary skill in the art.

The present disclosure may be described in terms of functional block components and various processing steps. Such functional blocks may be realized by any number of hardware and/or software components configured to perform the specified functions. For example, the present disclosure may employ various integrated circuit components, e.g., memory elements, processing elements, logic elements, look-up tables, and the like, which may carry out a variety of functions under the control of one or more microprocessors or other control devices. Similarly, where the elements of the present disclosure are implemented using software programming or software elements the present disclosure may be implemented with any programming or scripting language such as C, C++, Java, assembler, or the like, with the various algorithms being implemented with any combination of data structures, objects, processes, routines or other programming elements. Functional aspects may be implemented in algorithms that execute on one or more processors. Furthermore, the present disclosure could employ any number of conventional techniques for electronics configuration, signal processing and/or control, data processing and the like. The words "mechanism", "element", "means", and "configuration" are used broadly and are not limited to mechanical or physical embodiments, but can include software routines in conjunction with processors, etc.

The particular implementations shown and described herein are illustrative examples and are not intended to otherwise limit the scope of the embodiments in any way. For the sake of brevity, conventional electronics, control systems, software development and other functional aspects of the systems may not be described in detail. Furthermore, the connecting lines, or connectors shown in the various figures presented are intended to represent exemplary functional relationships and/or physical or logical couplings between the various elements. It should be noted that many alternative or additional functional relationships, physical connections or logical connections may be present in a practical device. The words "mechanism", "element", "unit", "structure", "means", and "construction" are used broadly and are not limited to mechanical or physical embodiments, but may include software routines in conjunction with processors, etc.

Moreover, no item or component is essential to the practice of the embodiments unless the element is specifically described as "essential" or "critical". It will also be recognized that the terms "comprises," "comprising," "includes," "including," "has," and "having," as used herein, are specifically intended to be read as open-ended terms of art. The use of the terms "a" and "an" and "the" and similar referents in the context of describing the invention (especially in the context of the following claims) are to be construed to cover both the singular and the plural, unless the context clearly indicates otherwise. In addition, it should be understood that although the terms "first," "second," etc. may be used herein to describe various elements, these elements should not be limited by these terms, which are only used to distinguish one element from another. Furthermore, recitation of ranges of values herein are merely intended to serve as a shorthand method of referring individually to each separate value falling within the range, unless otherwise indicated herein, and each separate value is incorporated into the specification as if it were individually recited herein.

The use of the terms "a" and "an" and "the" and similar referents in the context of describing the embodiments (especially in the context of the following claims) are to be construed to cover both the singular and the plural. Furthermore, recitation of ranges of values herein are merely intended to serve as a shorthand method of referring individually to each separate value falling within the range, unless otherwise indicated herein, and each separate value is incorporated into the specification as if it were individually recited herein. Finally, the steps of all methods described herein can be performed in any suitable order unless otherwise indicated herein or otherwise clearly contradicted by context. The present disclosure is not limited to the described order of the steps. The use of any and all examples, or exemplary language (e.g., "such as") provided herein, is intended merely to better illuminate the embodiments and does not pose a limitation on the scope of the embodiments unless otherwise claimed. Numerous modifications and adaptations will be readily apparent to those of ordinary skill in the art without departing from the spirit and scope of the present disclosure.

The use of any and all examples, or exemplary language (e.g., "such as") provided herein, is intended merely to better illuminate the invention and does not pose a limitation on the scope of the invention unless otherwise claimed. Numerous modifications and adaptations will be readily apparent to those of ordinary skill in this art without departing from the spirit and scope of the invention as defined by the following claims. Therefore, the scope of the invention is defined not by the detailed description of the invention but by the following claims, and all differences within the scope will be construed as being included in the invention.

## Claims

1. A method of controlling a photographing apparatus, the method comprising:
providing a user interface including an aperture setting menu for setting an aperture value of the photographing apparatus, a shutter speed setting menu for setting a shutter speed value of the photographing apparatus, and an exposure meter for displaying an exposure value;
receiving at least one of an aperture selection signal regarding the aperture setting menu or a shutter speed selection signal regarding the shutter speed setting menu; and
calculating at least one of the aperture value, the shutter speed value, or the exposure value based on at least one of the received aperture selection signal or the received shutter speed selection signal.

2. The method of claim 1, wherein photographing modes including a program mode (mode P), an aperture priority mode (mode A), a shutter speed priority mode (mode S), and a manual mode (mode M) are performed based on one or more of the aperture value, the shutter speed value, or the exposure value.

3. The method of claim 1, comprising:
if the aperture selection signal is received, providing an aperture changing menu for changing the aperture value;
setting the aperture value to a selected value via the aperture changing menu;
measuring an amount of light on an object based on a shutter release signal;
calculating the exposure value based on the measured amount of light;
calculating the shutter speed value based on the set aperture value and the calculated exposure value; and
displaying the set aperture value, the calculated exposure value, and the calculated shutter speed value.

4. The method of claim 3, wherein a color of at least one of the aperture setting menu or the set aperture value of the aperture changing menu indicates a photographing mode of the photographing apparatus.

5. The method of claim 3, wherein, if the aperture value is set as auto on the aperture changing menu, the aperture value and the shutter speed value are calculated based on the measured amount of light.

6. The method of claim 1, comprising:
if the shutter speed selection signal is received, providing a shutter speed changing menu for changing the shutter speed value;
setting the shutter speed value to a selected value via the shutter speed changing menu;
measuring an amount of light on an object based on a shutter release signal;
calculating the exposure value based on the measured amount of light;
calculating the aperture value based on the set shutter speed value and the calculated exposure value; and
displaying the set shutter speed value, the calculated exposure value, and the calculated aperture value.

7. The method of claim 6, wherein a color of at least one of the shutter speed setting menu or the set shutter speed value of the shutter speed changing menu indicates a photographing mode of the photographing apparatus.

8. The method of claim 6, wherein, if the shutter speed value is set as auto on the shutter speed changing menu, the aperture value and the shutter speed value are calculated based on the measured amount of light.

9. The method of claim 1, comprising:
if the aperture selection signal is received, providing an aperture changing menu for changing the aperture value, and setting the aperture value to a selected aperture value via the aperture changing menu;
if the shutter speed selection signal is received, providing a shutter speed changing menu for changing the shutter speed value, and setting the shutter speed value to a selected shutter speed value via the shutter speed changing menu;
measuring an amount of light on an object based on a shutter release signal;
calculating the exposure value based on the measured amount of light;
displaying the set aperture value, the set shutter speed value, and the calculated exposure value.

10. The method of claim 1, comprising:
measuring an amount of light on an object based on a shutter release signal;
calculating the exposure value based on the measured amount of light;
individually calculating the aperture value and the shutter speed value based on the calculated exposure value; and
displaying the calculated exposure value, the calculated aperture value, and the calculated shutter speed value.

11. The method of claim 1, further comprising transmitting photographing parameters including the aperture value, the shutter speed value, and the exposure value to the photographing apparatus.

12. A non-transitory computer-readable recording medium having recorded thereon a computer program for executing the method of claim 1.

13. A photographing apparatus comprising:
a user interface providing unit that provides a user interface including an aperture setting menu for setting an aperture value of the photographing apparatus, a shutter speed setting menu for setting a shutter speed value of the photographing apparatus, and an exposure meter for displaying an exposure value; and
a photographing parameter calculation unit that receives at least one of an aperture selection signal regarding the aperture setting menu or a shutter speed selection signal regarding the shutter speed setting menu, and that calculates at least one of the aperture value, the shutter speed value, or the exposure value based on at least one of the received aperture selection signal or the received shutter speed selection signal.

14. The photographing apparatus of claim 13, wherein photographing modes including a program mode (mode P), an aperture priority mode (mode A), a shutter speed priority mode (mode S), and a manual mode (mode M) are performed by the photographing apparatus based on one or more of the aperture value, the shutter speed value, or the exposure value.

15. The photographing apparatus of claim 13, further comprising:
a light amount measurement unit that measures an amount of light on an object according to a shutter release signal; and
a photographing parameter display control unit that displays the aperture value, the shutter speed value, and the exposure value,
wherein, if the aperture selection signal is received, the user interface providing unit provides an aperture changing menu for changing the aperture value, and sets the aperture value to a selected value via the aperture changing menu,
wherein the photographing parameter calculation unit calculates the exposure value based on the measured amount of light;
wherein the photographing parameter calculation unit calculates the shutter speed value based on the set aperture value and the calculated exposure value, and
wherein the photographing parameter display control unit displays the set aperture value, the calculated exposure value, and the calculated shutter speed value.
